# EUROPÄISCHE PATENTSCHRIFT

(11) **EP 3 196 106 B1**
(45) Veröffentlichungstag und Bekanntmachung des Hinweises auf die Patenterteilung: **13.06.2018**
(21) Anmeldenummer: 16002274.5
(22) Anmeldetag: 25.10.2016
(51) Int. Cl.: B62D 63/08, B60P 1/64, B60P 7/13, B61D 45/00

(54) **NUTZFAHRZEUGAUFBAU FÜR STRASSENFAHRZEUGE**
COMMERCIAL VEHICLE STRUCTURE FOR ROAD VEHICLES
CHÂSSIS DE VÉHICULE UTILITAIRE POUR VÉHICULE ROUTIER

(30) Priorität: 22.01.2016 DE 102016000574
(43) Veröffentlichungstag der Anmeldung: 26.07.2017
(73) Patentinhaber: Fahrzeugwerk Krone Beteiligungs-GmbH, 48480 Spelle (DE)
(72) Erfinder: Reibe, Mathias, DE - 19243 Wittenburg (DE)
(74) Vertreter: Pott, Ulrich

(56) Entgegenhaltungen:
- EP-A1- 0 025 557
- EP-A2- 1 254 806
- DE-A1- 19 507 603
- DE-A1- 19 756 009
- DE-A1-102013 107 730
- DE-U1- 9 210 842
- DE-U1-202014 103 101
- GB-A- 1 168 633

## Beschreibung

Die Erfindung bezieht sich auf einen Nutzfahrzeugaufbau für Straßenfahrzeuge, insbesondere auf einen Sattelanhänger oder einen Wechselkoffer, mit einem Längstraversen aufweisenden Nutzaufbauchassis, an dem zumindest eine eine Greifkante umfassende Greiftasche zum Zwecke der Eisenbahnverladung des Nutzfahrzeugaufbaus vorgesehen ist.

Nutzfahrzeugaufbauten für Straßenfahrzeuge, beispielsweise Sattelanhänger oder Wechselkoffer, haben in der Regel an der Unterseite ihres Chassis Längstraversen, an denen Greiftaschen mit Greifkanten vorgesehen sind, um die Vorgaben des internationalen Eisenbahnverbandes (UIC - union internationale des chemins de fer) zu erfüllen. Solche Greifkanten sind nach diesen Vorgaben notwendiger Bestandteil der auf Bahntaschenwagen zu verladenden Nutzfahrzeugen und Nutzfahrzeugaufbauten. Solche Nutzfahrzeugaufbauten für Straßenfahrzeuge sind mithin an die besonderen Anforderungen für den kombinierten Straßen- und Schienenkomfort angepasst.

Herkömmliche Nutzfahrzeugaufbauten, die diese UIC-Vorgaben erfüllen, haben als Schweiß- oder Schraubkonstruktionen ausgebildete Greiftaschen mit entsprechenden Greifkanten, die fester Bestandteil des Nutzfahrzeugaufbaus, beispielsweise des Sattelanhängers oder des Wechselkoffers, sind. Aufgrund unvermeidlicher Toleranzen im Herstellungsprozess kommt es allerdings bei diesen Ausführungen sehr häufig zu Abweichungen von vorgegebenen Maßeinheiten nach den UIC-Regeln, weil im Bereich der Greifkante der Greiftasche ein Versatz im Übergang vom Nutzfahrzeugaufbau zu einem Fahrzeugfahrgestell oder zu einem Eisenbahnwaggon unzulässig ist. Sollte eine derartige Maßungenauigkeit bei der Herstellung des Nutzfahrzeugaufbaus vorkommen, muss diese Maßungenauigkeit durch mechanisches Nacharbeiten und eine individuelle Anpassung korrigiert werden. Das führt zu kostenintensiven Montage- und Nachrüstarbeiten. Ein Nutzfahrzeugaufbau mit den Merkmalen der Präambel von Anspruch 1 ist von der DE19756009 bekannt. Es ist Aufgabe der vorliegenden Erfindung, einen Nutzfahrzeugaufbau der eingangs genannten Art zur Verfügung zu stellen, bei dem Maßungenauigkeiten während des Herstellungsprozesses sicher zu vermeiden sind.

Zur Lösung dieser Aufgabe sieht der Nutzfahrzeugaufbau der eingangs genannten Art vor, dass die Greiftasche lageveränderlich an der Längstraverse des Nutzfahrzeugaufbaus festgelegt ist.

Aufgrund der konstruktionsbedingten Lageveränderlichkeit der Greiftasche und damit auch der Greifkante lässt sich die Greiftasche und damit die Greifkante während des Herstellungsprozesses individuell festlegen. Auch eine nachträgliche Justage ist damit mit einfachen Mitteln ermöglicht, so dass es nicht zu montageaufwendigen mechanischen Nachrüstarbeiten kommt.

Die Greiftasche mit ihrer Greifkante kann beispielsweise nicht unmittelbar an der Längstraverse festgelegt sein, sondern auch in einer besonderen Greiftaschenhalterung, wobei über die Greiftaschenhalterung eine Verstellung der Greiftasche mit ihrer Greifkante quer zur Längsausrichtung der Längstraverse erfolgen kann. Dies kann auch derart erfolgen, dass die Greiftasche bzw. die Greifkante parallel zur Längstraverse ausgerichtet ist, aber auch ein bestimmtes Winkelmaß aufweisen kann, um die entsprechenden Eisenbahntaschenwagengeometrien zu 100 % einstellbar zu erfüllen.

Besonders bevorzugt wird, wenn die Greiftasche über Schraubverbindungen an der Längstraverse oder der Greiftaschenhalterung festzulegen ist. Dies kann derart erfolgen, dass zwischen entsprechenden Schrauben der Schraubverbindungen und den entsprechenden Lochausnehmungen in der Längstraverse oder in der entsprechenden Greiftaschenhalterung exzentrische Adapterscheiben vorgesehen sind, die über manuell betätigbare Werkzeuge, wie beispielsweise einen Schlitzschraubendreher, der in entsprechende Ausnehmungen in der exzentrischen Adapterscheibe eingreift, ist innerhalb der Lochausnehmung zu stellen, so dass damit das Abstandsmaß der Greiftasche und damit der Greifkante zur Längstraverse individuell verstellbar ist.

Dies ist mit nur wenigen Handgriffen zu vollziehen und ermöglicht daher während der Montage eine außerordentlich kostengünstige, aber exakte Einstellung der Maßgenauigkeit, die die UIC-Regeln für einen derartigen Nutzfahrzeugaufbau vorsieht. Weitere vorteilhafte Ausgestaltungen der Erfindung sind in weiteren Unteransprüchen angegeben, der nachfolgenden Beschreibung und der Zeichnung beschrieben. In der Zeichnung zeigen:

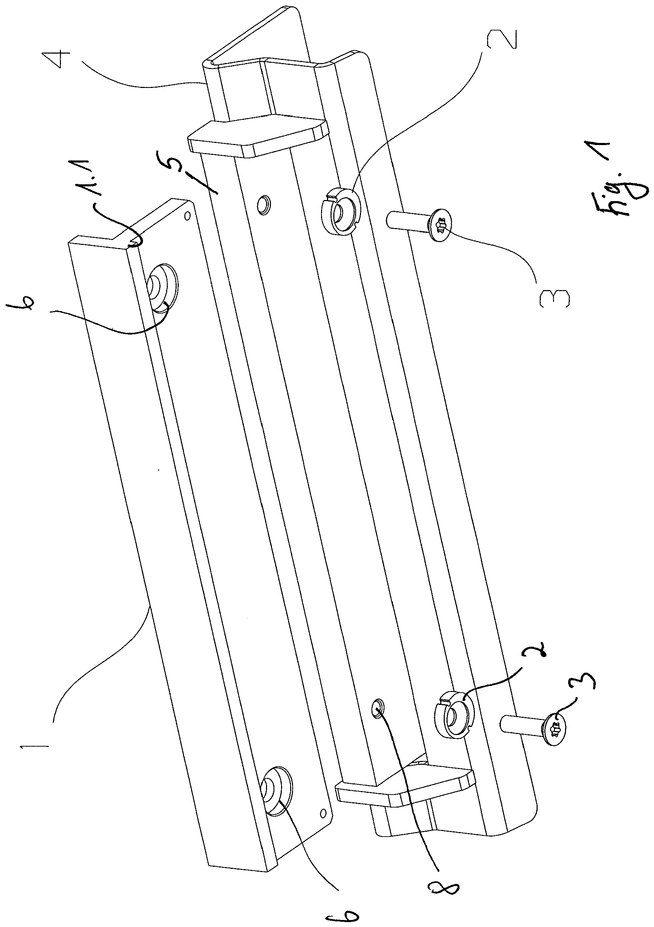

- Fig. 1: ausschnittsweise eine Längstraverse mit daran befestigter Greiftaschenhalterung und ein Ausführungsbeispiel einer Greiftasche mit Greifkante nach der Erfindung in Einzeldarstellung der Teile, und

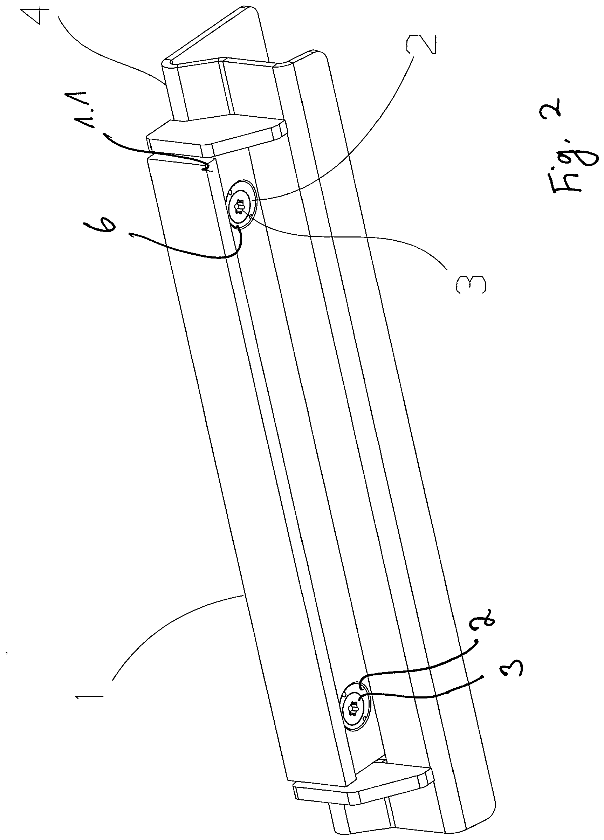

- Fig. 2: das Ausführungsbeispiel nach Fig. 1 im montierten Zustand.

In der Zeichnung sind nur die zum unmittelbaren Verständnis der Erfindung notwendigen Teile dargestellt. Auf die Darstellung des gesamten Nutzfahrzeugaufbaus wurde wegen der besseren Übersichtlichkeit verzichtet.

Die Längstraverse 4, an der die Greiftasche 1 über eine Greiftaschenhalterung 5 befestigt ist, ist beispielsweise an der Außen- und Unterseite eines Chassis eines Nutzfahrzeugaufbaus vorgesehen und kann beispielsweise auch die unteren Rahmenstreben des Nutzfahrzeugaufbaus bilden, an dem auch ein Ladeboden abgestützt ist.

Die Greiftasche 1 hat eine Greifkante 1.1 und entsprechende Lochausnehmungen 6, in die die exzentrisch ausgebildeten Adapterscheiben 2 und die Gewindeschrauben 3 einzuführen sind. Diese Adapterscheiben 2 weisen schlitzförmige Ausnehmungen auf, um mittels eines Werkzeuges eine Verdrehung innerhalb der Ausnehmung 6 vornehmen zu können, wodurch sich das Abstandsmaß der Greifkante 1.1 und mithin der Greiftasche1 zur Längstraverse 4 hin ändert. In der Greiftaschenhalterung 5 sind Gewindebohrungen 8 vorgesehen, in die das Außengewinde der Schrauben 3 eingreift, um die Greiftasche 1 mit der Greifkante 1.1 sicher in der Greiftaschenhalterung 5 und damit in der Längstraverse 4 festzulegen.

## Patentansprüche

1. Nutzfahrzeugaufbau für Straßenfahrzeuge, insbesondere Sattelanhänger oder Wechselkoffer, mit einem Längstraversen (4) aufweisenden Nutzaufbauchassis, an dem zumindest eine eine Greifkante (1.1) umfassende Greiftasche zum Zwecke der Eisenbahnverladung des Nutzfahrzeugaufbaus vorgesehen ist, **dadurch gekennzeichnet, dass** die Greiftasche (1) lageveränderlich an der Längstraverse (4) des Nutzfahrzeugaufbaus festgelegt ist.

2. Nutzfahrzeugaufbau nach Anspruch 1, **dadurch gekennzeichnet, dass** die Greiftasche (1) in einer an der Längstraverse (4) vorgesehenen Greiftaschenhalterung (5) lageveränderlich festgelegt ist.

3. Nutzfahrzeugaufbau nach Anspruch 1 oder 2, **dadurch gekennzeichnet, dass** die Greiftasche (1) quer zur Längsausrichtung der Längstraverse (4) verstellbar gehaltert ist.

4. Nutzfahrzeugaufbau nach einem der Ansprüche 1 bis 3, **dadurch gekennzeichnet, dass** die Greiftasche (1) über Schraubverbindungen an der Längstraverse (9) oder der Greiftaschenhalterung (5) lageveränderlich festlegbar ist.

5. Nutzfahrzeugaufbau nach einem der Ansprüche 1 bis 4, **dadurch gekennzeichnet, dass** die Greiftasche (1) über zumindest zwei Schraubverbindungen an der Längstraverse (4) oder der Greiftaschenhalterung (5) festlegbar sind, die Adapterscheiben (2) und Gewindeschrauben (3) umfassen.

6. Nutzfahrzeugaufbau nach Anspruch 5, **dadurch gekennzeichnet, dass** die Adapterscheiben (2) exzentrisch ausgebildet sind und die Greiftasche (1) Lochausnehmungen (6) zur Aufnahme der Adapterscheibe (2) und zur Aufnahme der Schraube (3) der Schraubverbindung aufweist, wobei die Lochausnehmungen (6) zur Aufnahme der Schraube der Schraubverbindung einen Durchmesser aufweist, der größer ist als der Durchmesser des Schraubenschaftes.

7. Nutzfahrzeugaufbau nach Anspruch 6, **dadurch gekennzeichnet, dass** die Adapterscheibe (2) zumindest eine schlitzförmige Ausnehmung zur Aufnahme eines Verdrehwerkzeuges wie einen Schraubendreher aufweist.

8. Nutzfahrzeugaufbau nach Anspruch 7, **dadurch gekennzeichnet, dass** über die zumindest zwei exzentrischen Adapterscheiben (2) die Greiftasche (1) auf ein Abstandsmaß zur Längstraverse (4) des Nutzfahrzeugaufbaus derart einstellbar ist, dass sich die Greiftasche (1) parallel zur Längstraverse (4) erstreckt, oder ein derartiges, dass sich die Greiftasche (1) nicht parallel zur Längstraverse (4) erstreckt.

9. Nutzfahrzeugaufbau nach einem der Ansprüche 1 bis 8, **dadurch gekennzeichnet, dass** in Längsrichtung der Greiftasche (1) mehrere mit Abstand zueinander vorgesehene Ausnehmungen (6) zur Aufnahme von jeweils einer exzentrischen Adapterscheibe (2) und jeweils eine Gewindeschraube (3) vorgesehen sind.

10. Nutzfahrzeugaufbau nach einem der Ansprüche 1 bis 9, **dadurch gekennzeichnet, dass** die Greiftasche (1) in einer Greiftaschenhalterung (5) montiert ist, die an der Längstraverse (4) angebaut ist und jeweils eine Gewindebohrung (6) für die jeweilige Schraube (3) der Schraubenverbindung der Greiftasche (1) aufweist.

## Claims

1. Commercial vehicle body for road vehicles, in particular semi-trailers or swap bodies, comprising a commercial body chassis that comprises longitudinal crossmembers (4) and on which at least one gripping pocket that comprises a gripping edge (1.1) is provided for the purpose of loading the commercial vehicle body onto trains, **characterised in that** the gripping pocket (1) is fixed so as to be adjustable in position on the longitudinal crossmember (4) of the commercial vehicle body.

2. Commercial vehicle body according to claim 1, **characterised in that** the gripping pocket (1) is fixed so as to be adjustable in position in a gripping pocket mount (5) provided on the longitudinal crossmember (4).

3. Commercial vehicle body according to either claim 1 or claim 2, **characterised in that** the gripping pocket (1) is mounted so as to be adjustable transversely to the longitudinal orientation of the longitudinal crossmember (4).

4. Commercial vehicle body according to any of claims 1 to 3, **characterised in that** the gripping pocket (1) is fixed so as to be adjustable in position on the longitudinal crossmember (9) or on the gripping pocket mount (5) by means of screw connections.

5. Commercial vehicle body according to any of claims 1 to 4, **characterised in that** the gripping pocket (1) can be fixed on the longitudinal crossmember (4) or on the gripping pocket mount (5) by means of at least two screw connections which comprise adapter discs (2) and threaded screws (3).

6. Commercial vehicle body according to claim 5, **characterised in that** the adapter discs (2) are eccentric and the gripping pocket (1) comprises hole recesses (6) for receiving the adapter disc (2) and for receiving the screw (3) of the screw connection, the hole recesses (6) for receiving the screw of the screw connection having a diameter that is greater than the diameter of the screw shank.

7. Commercial vehicle body according to claim 6, **characterised in that** the adapter disc (2) comprises at least one slot-shaped recess for receiving a twisting tool such as a screwdriver.

8. Commercial vehicle body according to claim 7, **characterised in that** the gripping pocket (1) can be adjusted, by means of the at least two eccentric adapter discs (2), to a spacing from the longitudinal crossmember (4) of the commercial vehicle body such that the gripping pocket (1) extends in parallel with the longitudinal crossmember (4), or such that the gripping pocket (1) does not extend in parallel with the longitudinal crossmember (4).

9. Commercial vehicle body according to any of claims 1 to 8, **characterised in that** a plurality of mutually spaced recesses (6) for receiving an eccentric adapter disc (2) in each case and a threaded screw (3) in each case are provided in the longitudinal direction of the gripping pocket (1).

10. Commercial vehicle body according to any of claims 1 to 9, **characterised in that** the gripping pocket (1) is mounted in a gripping pocket mount (5) that is attached to the longitudinal crossmember (4) and comprises a threaded hole (6) in each case for the relevant screw (3) of the screw connection of the gripping pocket (1).

## Revendications

1. Structure de véhicule utilitaire, destinée à des véhicules routiers, en particulier des semi-remorques ou des caissons amovibles, comprenant un châssis de structure utilitaire qui comporte des poutres longitudinales (4) et sur lequel il est prévu au moins une poche de préhension pourvue d'un bord de préhension (1.1) et destinée au chargement ferroviaire de la structure de véhicule utilitaire, **caractérisée en ce que** la poche de préhension (1) est fixée, de manière variable en position, à la poutre longitudinale (4) de la structure de véhicule utilitaire.

2. Structure de véhicule utilitaire selon la revendication 1, **caractérisée en ce que** la poche de préhension (1) est fixée, de manière variable en position, dans un support de poche de préhension (5) prévu au niveau de la poutre longitudinale (4).

3. Structure de véhicule utilitaire selon la revendication 1 ou 2, **caractérisée en ce que** la poche de préhension est supportée (1) de manière réglable transversalement à l'orientation longitudinale de la poutre longitudinale (4).

4. Structure de véhicule utilitaire selon l'une des revendications 1 à 3, **caractérisée en ce que** la poche de préhension (1) peut être fixée, de manière variable en position, à la poutre longitudinale (9) ou au support de poche de préhension (5) au moyen de liaisons à vis.

5. Structure de véhicule utilitaire selon l'une des revendications 1 à 4, **caractérisée en ce que** la poche de préhension (1) peut être fixée à la poutre longitudinale (4) ou au support de poche de préhension (5) au moyen de deux liaisons à vis qui comportent des rondelles d'adaptation (2) ou des vis (3).

6. Structure de véhicule utilitaire selon la revendication 5, **caractérisée en ce que** les rondelles d'adaptation (2) sont formées de manière excentrique et la poche de préhension (1) comporte des évidements de trou (6) destinés à recevoir la rondelle d'adaptation (2) et à recevoir la vis (3) de la liaison à vis, les évidements de trou (6) destinés à recevoir la vis de la liaison à vis ayant un diamètre qui est supérieur au diamètre de la tige de vis.

7. Structure de véhicule utilitaire selon la revendication 6, **caractérisée en ce que** la rondelle d'adaptation (2) comporte au moins un évidement en forme de fente destinée à recevoir un outil de tournage tel qu'un tournevis.

8. Structure de véhicule utilitaire selon la revendication 7, **caractérisée en ce que** la poche de préhension (1) peut être réglée, par le biais des au moins deux rondelles d'adaptation excentriques (2), à une distance de la poutre longitudinale (4) de la structure de véhicule utilitaire telle que la poche de préhension (1) s'étend parallèlement à la poutre longitudinale (4) ou telle que la poche de préhension (1) ne s'étend pas parallèlement à la poutre longitudinale (4).

9. Structure de véhicule utilitaire selon l'une des revendications 1 à 8, **caractérisée en ce qu'**il est prévu, dans la direction longitudinale de la poche de préhension (1), une pluralité d'évidements (6), prévus à distance les uns des autres et destinés à recevoir chacun une rondelle d'adaptation excentrique (2), et pour chacun d'eux une vis (3).

10. Structure de véhicule utilitaire selon l'une des revendications 1 à 9, **caractérisée en ce que** la poche de préhension (1) est montée dans un support de poche de préhension (5) qui est rapporté à la poutre longitudinale (4) et qui comporte chacun un alésage fileté (6) destiné à la vis respective (3) de la liaison à vis de la poche de préhension (1).
